# DEMANDE DE BREVET EUROPEEN

(11) **EP 1 542 037 A1**
(43) Date de publication de la demande: **15.06.2005**
(21) Numéro de dépôt: 04292856.4
(22) Date de dépôt: 01.12.2004
(51) Int. Cl.: G01S 17/95, G01S 7/481, H01S 3/00

(54) **Instrument d'observation de type Lidar à optique d'adaptation de faisceau laser de sonde**

(30) Priorité: 09.12.2003 FR 0314380
(71) Demandeur: ALCATEL, 75008 Paris (FR)
(72) Inventeur: Pain, Thierry, 06250 Mougins (FR)
(74) Mandataire: Hedarchet, Stéphane

(57) **Abrégé**

Un instrument d'observation de type Lidar comprend i) un ensemble laser (L) délivrant un faisceau propre à sonder une cible, ii) un télescope de collection (T) présentant un axe de visée (AVT) et chargé de collecter les photons du faisceau de sonde ayant interagi avec la cible, iii) une optique de grandissement (OG) de type afocal placée sur le trajet du faisceau de sonde, et iv) une optique d'adaptation (OA) placée entre l'ensemble laser (L) et l'optique de grandissement (OG), et présentant des caractéristiques adaptées aux propriétés géométriques de propagation du faisceau de sonde en champ proche, de sorte qu'il présente à l'entrée de l'optique de grandissement (OG) une enveloppe de déformation choisie.

## Description

L'invention concerne le domaine des instruments d'observation, et en particulier ceux de type Lidar (pour « Light détection and ranging »).

Un Lidar est un instrument optique comprenant un ensemble laser, utilisé comme sondeur d'une zone d'observation (ou cible), et un télescope de collection, chargé de collecter les photons provenant de l'ensemble laser et ayant interagi avec la cible, c'est-à-dire ayant été diffusés par des obstacles diffus (tels que l'atmosphère) ou réfléchis par des obstacles pleins (tels que le sol).

On entend ici par « ensemble laser », une source laser, comprenant une alimentation électrique et délivrant un faisceau de lumière laser selon une ou plusieurs longueurs d'onde, de manière à permettre un fonctionnement du Lidar en mode monochromatique ou multichromatique, le tout étant équipé d'un dispositif de refroidissement.

Comme le sait l'homme de l'art, il existe deux grands types de Lidar, celui dit à montage monostatique et celui dit à montage bistatique.

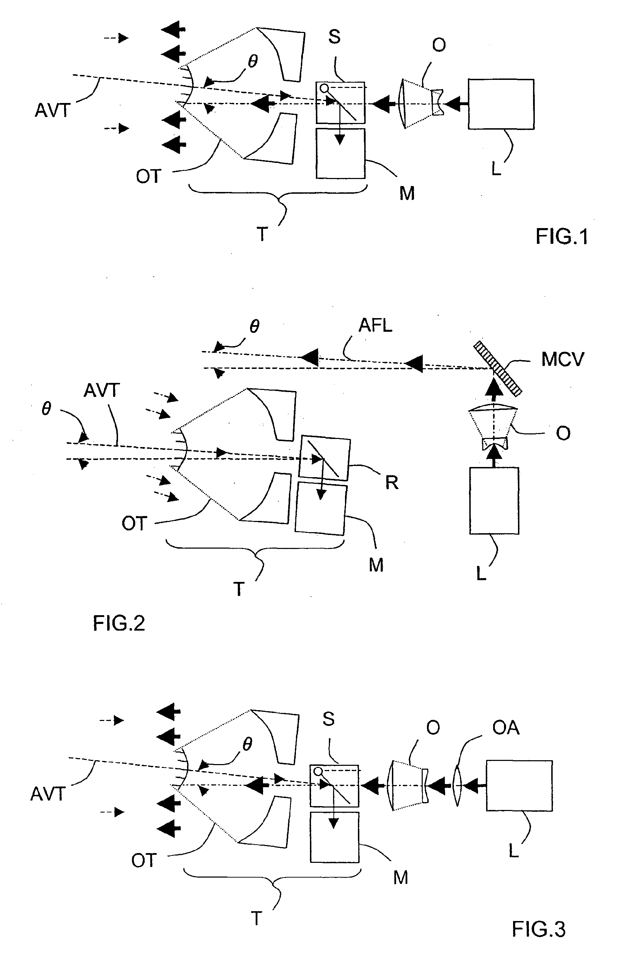

Dans un Lidar à montage monostatique, le faisceau laser de sonde et les photons collectés partagent le télescope T, comme illustré sur la figure 1. Plus précisément, l'ensemble laser L est placé derrière le télescope T, avec éventuellement interposition d'une optique de grandissement OG, du type afocal (ou BEU pour « Beam Expandeur Unit »). Ainsi la section de son faisceau de sonde est magnifiée par l'optique de grandissement OG (ou BEU), puis par le télescope T avant que ce faisceau de sonde ne se propage en direction de la zone d'observation. En raison du principe de « retour inverse de la lumière », la lumière laser diffusée ou réfléchie par la zone d'observation retourne en direction du télescope T en suivant exactement le même chemin que celui emprunté par le faisceau laser de sonde.

Un tel montage est donc quasiment insensible au dépointage éventuel θ du télescope T par rapport au faisceau laser de sonde. Mais, il nécessite l'utilisation d'un séparateur S sur le trajet du faisceau laser de sonde afin de le séparer de la lumière laser diffusée ou réfléchie. Un tel séparateur S est généralement réalisé sous la forme d'un miroir basculant (ou FFM pour « Flip-Flop Mirror »), intercalé entre le télescope T et l'optique de grandissement OG (ou BEU).

Ce type de montage présente au moins trois inconvénients. Un premier inconvénient réside dans l'utilisation du séparateur S, qui, lorsqu'il tombe en panne, empêche le Lidar de fonctionner, ce qui est particulièrement ennuyeux dans les applications spatiales. Un deuxième inconvénient réside dans la présence de l'optique de grandissement OG (ou BEU) qui oblige à disposer d'un séparateur S de section importante. Un troisième inconvénient réside dans le fait que le télescope T est un dispositif dont les caractéristiques sont déterminées en fonction des propriétés du signal. Par conséquent ses caractéristiques (en particulier son facteur de grandissement) ne peuvent pas être facilement optimisées.

Dans un Lidar à montage bistatique, le faisceau laser de sonde est émis sensiblement parallèlement à l'axe de visée AVT du télescope T, comme illustré sur la figure 2. Cela permet de s'affranchir du séparateur. Cependant, le Lidar est particulièrement sensible au dépointage θ du télescope T qui est considérablement amplifié par son grandissement en réception (ou collection).

Une optique de grandissement OG, de type afocal (BEU), est placée sur le trajet du faisceau laser de sonde afin de compenser une partie du dépointage θ. Par ailleurs, un dispositif de correction d'alignement MCV, généralement de type TTO (pour « Tip Tilt Optic »), est chargé de corriger finement (c'est-à-dire suivant deux directions perpendiculaires) l'axe du faisceau laser de sonde, de sorte qu'il soit le plus possible parallèle à l'axe de visée du télescope T. En d'autres termes, le dispositif de correction d'alignement MCV est un correcteur de visée permettant de corriger les variations de position relative de l'ensemble laser L par rapport au télescope T, induites par les instabilités de l'ensemble laser L.

Un tel montage impose donc de sévères contraintes d'alignement et de stabilité pour ce qui concerne l'ensemble laser L, et nécessite un mécanisme actif d'asservissement du faisceau laser de sonde sur l'axe de visée du télescope par le biais d'un correcteur de visée MCV. Lorsque ce mécanisme actif tombe en panne, le Lidar ne peut plus fonctionner correctement, dans le pire des cas le signal n'est plus collecté, ce qui est particulièrement ennuyeux dans les applications spatiales.

En outre, l'ensemble laser L comportant un dispositif de refroidissement, il peut, lorsqu'il est solidarisé au télescope T, comme c'est souvent le cas dans un montage monostatique, induire des interférences thermiques et/ou mécaniques nuisibles aux éléments optiques du télescope et/ou à son dispositif de détection. Ces interférences thermiques sont encore plus nuisibles lorsque le Lidar comporte un filtre spectral requérant une grande stabilité.

Aucun Lidar connu n'apportant une entière satisfaction, l'invention a donc pour but d'améliorer la situation aussi bien dans le cas d'un Lidar à montage monostatique que dans celui d'un Lidar à montage bistatique.

Elle propose à cet effet un instrument d'observation, de type Lidar, comprenant un ensemble laser délivrant un faisceau propre à sonder une cible, un télescope de collection présentant un axe de visée et chargé de collecter les photons du faisceau de sonde ayant interagi avec la cible, et une optique de grandissement de type afocal placée sur le trajet du faisceau de sonde.

Cet instrument d'observation se caractérise par le fait qu'il comprend en outre une optique d'adaptation placée entre l'ensemble laser et l'optique de grandissement, et présentant des caractéristiques adaptées aux propriétés géométriques de propagation du faisceau de sonde en champ proche, de sorte que ce faisceau présente à l'entrée de l'optique de grandissement une enveloppe de déformation choisie.

L'enveloppe de déformation est préférentiellement définie par ce que l'homme de l'art appelle la divergence naturelle, la position du waist et le diamètre minimal au niveau du waist du faisceau de sonde à l'entrée de l'optique de grandissement. Ces divergence, diamètre et position sont donc choisis en fonction du grandissement désiré en sortie de l'optique de grandissement, compte tenu des caractéristiques du faisceau laser de sonde en sortie de l'ensemble laser.

L'instrument d'observation selon l'invention peut comporter d'autres caractéristiques qui pourront être prises séparément ou en combinaison, et notamment :
- l'optique d'adaptation peut comporter une lentille asphérique ou bien une lentille à gradient d'indice (GRIN), voire même une combinaison de lentilles à gradient d'indice et asphérique,
- l'optique de grandissement de type afocal (ou BEU), peut comporter une combinaison de lentilles ou de miroirs,
- il peut être agencé sous la forme d'un montage de type monostatique ou bistatique,
- l'ensemble laser peut être désolidarisé du télescope ou bien solidarisé à ce dernier.

L'invention est particulièrement bien adaptée, bien que de façon non exclusive, aux domaines de l'observation spatiale, notamment atmosphérique (et en particulier dans le cadre météorologique), de la détection, notamment de pollutions, de la télémétrie laser, et des télécommunications optiques.

D'autres caractéristiques et avantages de l'invention apparaîtront à l'examen de la description détaillée ci-après, et des dessins annexés, sur lesquels :
- la figure 1 illustre de façon schématique un exemple de réalisation d'un lidar à montage monostatique de l'art antérieur,
- la figure 2 illustre de façon schématique un exemple de réalisation d'un lidar à montage bistatique de l'art antérieur,
- la figure 3 illustre de façon schématique un exemple de réalisation d'un lidar à montage monostatique selon l'invention,
- la figure 4 détaille l'action de l'optique d'adaptation selon l'invention sur le faisceau laser de sonde délivré par l'ensemble laser, et
- la figure 5 illustre de façon schématique un exemple de réalisation d'un lidar à montage bistatique selon l'invention.

Les dessins annexés pourront non seulement servir à compléter l'invention, mais aussi contribuer à sa définition, le cas échéant.

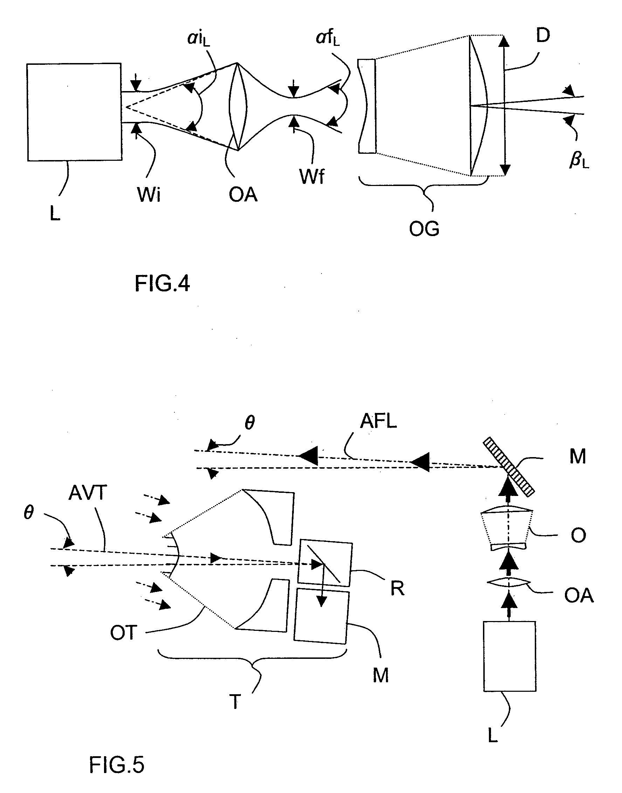

On se réfère tout d'abord aux figures 3 et 4 pour décrire l'invention dans une application aux instruments d'observation de type Lidar à montage monostatique.

Comme il ressort de la comparaison des figures 1 et 3, un instrument d'observation selon l'invention, ci-après appelé Lidar, présente la même architecture que celle d'un Lidar de l'art antérieur ainsi que les mêmes éléments, mais comporte en supplément une optique d'adaptation qui sera décrite plus loin en référence à la figure 4.

Comme cela est illustré sur la figure 3, un Lidar selon l'invention comporte tout d'abord un ensemble laser L comprenant une source laser délivrant en sortie un faisceau de lumière laser selon une ou plusieurs longueurs d'onde, selon que le fonctionnement est monochromatique ou multichromatique. Dans un lidar, l'ensemble laser L fonctionne habituellement avec une puissance élevée qui nécessite un dispositif chargé d'assurer le refroidissement de la source laser et plus précisément des dispositifs de pompage optique. Dans le cas d'un instrument spatial et pour des puissances électriques consommées typiquement supérieures à 100 Watts, le dispositif de refroidissement est généralement constitué de caloducs reliés à des radiateurs passifs.

Le faisceau de lumière laser est classiquement caractérisé en sortie de l'ensemble laser L par une position de waist (initial) Wi, un diamètre d_{L} au niveau du waist (initial) Wi et une divergence naturelle αi_{L}. Il est ici rappelé que le waist d'un faisceau laser est l'endroit où ce faisceau présente le diamètre d_{L} le plus faible.

Dans un Lidar traditionnel, l'ensemble laser L est suivi d'une optique de grandissement OG chargée d'appliquer au faisceau laser (ou faisceau de sonde) un grandissement m égal au rapport entre son diamètre utile D (en sortie de l'optique de grandissement) et le diamètre d_{L} au niveau du waist (initial) Wi, soit m = D/d_{L}. L'optique de grandissement OG est de type afocal (on l'appelle plus simplement « afocal » ou BEU pour « Beam Expandeur Unit ») et peut être réalisée de nombreuses manières et notamment sous la forme d'une combinaison de lentilles (comme cela est schématiquement illustré) ou d'une combinaison de miroirs.

En sortie de l'afocal OG le faisceau de sonde présente une divergence β_{L} définie par la relation m = D/d_{L} = αi_{L}/β_{L}.

La divergence naturelle (initiale) αi_{L}, la position du waist (initial) Wi et le diamètre minimal initial d_{L} au niveau du waist définissent conjointement ce que l'homme de l'art appelle les propriétés en champ proche du faisceau de sonde, que l'on peut également appeler l'enveloppe de déformation.

Dans un Lidar selon l'invention, on intercale une optique d'adaptation OA entre l'ensemble laser L et l'optique de grandissement OG (ou afocal) afin de contrôler le grandissement m' disponible pour l'afocal OG.

Cette optique d'adaptation OA est plus précisément chargée de produire un faisceau de sonde présentant une taille (bien) inférieure à celle au niveau du waist initial Wi, de manière à augmenter dans la même proportion le grandissement m' disponible pour l'afocal OG. En d'autres termes, l'optique d'adaptation OA est chargée de transformer les propriétés géométriques de propagation du faisceau de sonde en champ proche (c'est-à-dire sensiblement au niveau du waist initial Wi) afin qu'il présente à l'entrée de l'optique de grandissement (ou afocal) OG une enveloppe de déformation finale choisie.

Si le diamètre minimal au niveau du waist final Wf en sortie de l'optique d'adaptation OA est égal à d_{L}/n (n pouvant prendre n'importe quelle valeur supérieure à 1), alors la nouvelle divergence naturelle αf_{L} est égale à nαi_{L}. Le grandissement m' est alors donné par la relation m' = nD/d_{L} = nαi_{L}/β_{L}. Par exemple, si n = 2, alors m' = 2m.

Ainsi, en réduisant la section (ou diamètre minimal) du faisceau de sonde on augmente sa divergence dans le même rapport. Mais, cela est sans conséquence du fait que l'augmentation est compensée lors de la traversée de l'afocal OG.

Il est important de noter que, d'une part, la divergence β_{L} en sortie de l'afocal OG demeure inchangée, et d'autre part, l'afocal OG doit être modifié par rapport à ce qu'il serait en l'absence de l'optique d'adaptation OA, afin de tenir compte des nouvelles caractéristiques du faisceau de sonde en sortie de l'optique d'adaptation OA. On entend ici par « nouvelles caractéristiques », la nouvelle enveloppe de déformation définie par la divergence naturelle finale αf_{L}, la position du waist final Wf et le diamètre minimal final d'_{L} = d'_{L}/n.

Par exemple dans le cas d'un afocal à lentilles, la modification porte sur les focales des lentilles d'entrée et de sortie. Le diamètre utile D de l'afocal OG ne doit pas être modifié.

L'optique adaptative OA peut être réalisée de nombreuses manières, et notamment sous la forme d'une simple lentille asphérique (comme illustré sur les figures 3 et 4), ou bien sous la forme d'une lentille à gradient d'indice, ou encore sous la forme d'une combinaison de lentilles asphérique et à gradient d'indice. D'une manière générale, quel que soit le mode de réalisation envisagé, les caractéristiques de l'optique d'adaptation OA doivent être adaptées aux propriétés géométriques de propagation du faisceau de sonde en champ proche de sorte qu'il présente une enveloppe de déformation choisie à l'entrée de l'optique de grandissement OG.

Plus le gain (n) en grandissement est grand, moins la contrainte de stabilité de l'ensemble laser L vis à vis du télescope T est sévère. Par conséquent, l'invention peut permettre un relâchement très important des contraintes d'alignement et de stabilité de l'ensemble laser L.

Lorsque le Lidar est à montage monostatique, comme illustré sur la figure 3, le faisceau de sonde délivré par l'optique de grandissement (ou afocal) OG parvient au niveau d'un module de séparation (ou séparateur) S contrôlant l'accès au télescope T, ainsi qu'à son module de détection MD.

Ce module de séparation (ou séparateur) S est par exemple réalisé sous la forme d'un miroir basculant, tel qu'un FFM (pour « Flip-Flop Mirror »). Selon la position dans laquelle il est placé, le miroir basculant S permet soit au faisceau de sonde de pénétrer dans le télescope T afin d'y être magnifié par ses moyens optiques OT avant de se diriger vers la cible (ou zone d'observation), soit aux photons collectés par lesdits moyens optiques OT du télescope T, après avoir interagi avec la cible, de gagner par réflexion le module de détection MD (lequel est éventuellement pourvu d'un ou plusieurs filtres spectraux). Il est rappelé que les photons collectés par les moyens optiques OT du télescope T ont emprunté le même chemin que le faisceau de sonde (entre la cible et le télescope T) en raison du principe de retour inverse de la lumière.

Pour ce type de Lidar à montage monostatique, l'invention permet donc de contrôler le grandissement de l'optique de grandissement OG tout en réduisant son diamètre et celui du séparateur S. Par ailleurs, les contraintes d'alignement et de stabilité de l'ensemble laser L vis à vis du télescope T étant fortement relâchées, il n'est plus indispensable que le télescope T et l'ensemble laser L soient montés sur une même embase. Cela est particulièrement avantageux dans le cas du Lidar fonctionnant à forte puissance, puisque cela permet d'éviter que l'optique de collection OT et le module de détection subissent les interférences thermiques et/ou mécaniques induites par l'ensemble laser L.

On se réfère maintenant à la figure 5 pour décrire un exemple de réalisation d'un Lidar à montage bistatique selon l'invention.

Le Lidar à montage bistatique reprend la quasi totalité des éléments constituant le Lidar à montage monostatique décrit ci-avant en référence aux figures 3 et 4.

Il diffère tout d'abord de ce dernier par le fait qu'il comprend un miroir M non asservi permettant de réfléchir le faisceau de sonde, délivré par l'optique de grandissement OG, dans une direction AFL sensiblement parallèle à l'axe de visée AVT du télescope T (au dépointage θ éventuel près).

Le grandissement appliqué au faisceau de sonde étant désormais bien supérieur (m' = nm), l'éventuel dépointage θ du faisceau de sonde par rapport à l'axe de visée AVT du télescope T n'est plus réellement gênant. Par conséquent, contrairement aux Lidars à montage bistatique de l'art antérieur, le Lidar à montage bistatique selon l'invention ne requiert plus de dispositif correcteur de visée asservissant la position du faisceau de sonde sur l'axe de visée AVT du télescope T.

Le Lidar à montage bistatique diffère en outre du Lidar à montage monostatique par le fait qu'il comprend un module de réflexion R à la place du séparateur S. Ce module de réflexion R est simplement chargé de réfléchir les photons collectés par les moyens optiques OT du télescope T vers le module de détection MD.

En d'autres termes, le Lidar à montage bistatique selon l'invention ne comporte plus aucun mécanisme actif, et notamment pas de dispositif de correction de visée (tel qu'un TTO pour Tip Tilt Optic), ce qui est particulièrement avantageux, notamment pour les applications spatiales. Cet avantage vient ici s'ajouter aux avantages que confère l'invention aux Lidars à montage monostatique.

L'ensemble laser L d'un Lidar à montage bistatique selon l'invention peut donc être installé sur une embase différente de celle sur laquelle est installé le télescope T de manière à ne pas le perturber tant mécaniquement que thermiquement.

En raison des nombreux avantages précités, l'invention peut être utilisée dans de nombreux domaines. Ainsi, elle peut servir dans le domaine de l'observation spatiale, notamment de l'atmosphère terrestre, et en particulier pour effectuer des observations météorologiques. Elle peut également servir dans le domaine de la détection, notamment de pollutions atmosphériques comme terrestres, ou dans le domaine de la télémétrie laser (en particulier lorsque le montage est de type monostatique), ou encore dans le domaine des télécommunications optiques, par exemple pour définir la direction d'un faisceau laser modulé permettant l'échange de données entre stations de communications.

L'invention ne se limite pas aux modes de réalisation d'instruments d'observation de type Lidar décrits ci-avant, seulement à titre d'exemple, mais elle englobe toutes les variantes que pourra envisager l'homme de l'art dans le cadre des revendications ci-après.

## Revendications

1. Instrument d'observation de type Lidar, comprenant un ensemble laser (L) délivrant un faisceau propre à sonder une cible, un télescope de collection (T) présentant un axe de visée (AVT) et chargé de collecter des photons du faisceau de sonde ayant interagi avec ladite cible, et une optique de grandissement (OG) de type afocal placée sur le trajet dudit faisceau de sonde, **caractérisé en ce qu'**il comprend une optique d'adaptation (OA) placée entre ledit ensemble laser (L) et ladite optique de grandissement (OG), et présentant des caractéristiques adaptées aux propriétés géométriques de propagation dudit faisceau de sonde en champ proche, de sorte qu'il présente à l'entrée de ladite optique de grandissement (OG) une enveloppe de déformation choisie.

2. Instrument d'observation selon la revendication 1, **caractérisé en ce que** ladite enveloppe de déformation est définie par une divergence naturelle choisie, une position de waist choisie et un diamètre minimal choisi dudit faisceau de sonde à l'entrée de ladite optique de grandissement (OG).

3. Instrument d'observation selon l'une des revendications 1 et 2, **caractérisé en ce que** ladite optique d'adaptation (OA) comporte une lentille asphérique.

4. Instrument d'observation selon l'une des revendications 1 à 3, **caractérisé en ce que** ladite optique d'adaptation (OA) comporte une lentille à gradient d'indice.

5. Instrument d'observation selon l'une des revendications 1 à 4, **caractérisé en ce que** ladite optique de grandissement (OG) comporte des lentilles.

6. Instrument d'observation selon l'une des revendications 1 à 4, **caractérisé en ce que** ladite optique de grandissement de type afocal (OG) comporte des miroirs.

7. Instrument d'observation selon l'une des revendications 1 à 6, **caractérisé en ce qu'**il constitue un montage de type monostatique.

8. Instrument d'observation selon l'une des revendications 1 à 6, **caractérisé en ce qu'**il constitue un montage de type bistatique.

9. Instrument d'observation selon l'une des revendications 1 à 8, **caractérisé en ce que** ledit ensemble laser (L) est désolidarisé dudit télescope (T).

10. Instrument d'observation selon l'une des revendications 1 à 9, **caractérisé en ce que** ledit ensemble laser (L) est solidarisé audit télescope (T).
